# EUROPEAN PATENT APPLICATION

(11) **EP 4 506 712 A1**
(43) Date of publication of application: **12.02.2025**
(21) Application number: 23190216.4
(22) Date of filing: 08.08.2023
(51) Int. Cl.: G01S 5/02, H04W 64/00

(54) **DETERMINING NODE LOCATION IN A WIRELESS NETWORK**

(71) Applicant: NXP USA, Inc., Austin TX 78735 (US)
(72) Inventor: Barbaric, Tvrtko, 5656 AG, Eindhoven (NL); Dorris, Wesley Parker, 5656 AG, Eindhoven (NL)
(74) Representative: Miles, John Richard

(57) **Abstract**

The disclosure relates to determining a physical location of nodes in a wireless network comprising a plurality of nodes. Example embodiments include a method of determining a physical location of a plurality of nodes (102) in a wireless network (100), the method comprising: i) operating a first node (102m) of the plurality of nodes (102) in a scanning mode to detect a second node (102n) of the plurality of nodes (102) operating in an advertising mode within range of the first node (102m); ii) repeating step i) for other nodes of the plurality of nodes (102) to determine a list of node pairs that are within range of each other for each of the plurality of nodes (102) in the wireless network (100); iii) transmitting the list of node pairs from each of the plurality of nodes (102) in the wireless network (100) to a controlling node (101); iv) instructing by the controlling node (101) each of the node pairs to perform a channel sounding operation to determine a physical distance between the node pair; and v) constructing by the controlling node (101) a location map of the plurality of nodes (102) in the wireless network (100) based on the physical distance between each node pair.

## Description

### Field

The disclosure relates to determining a physical location of nodes in a wireless network comprising a plurality of nodes.

### Background

A wide range of different wireless networks are currently available, which may be based on different underlying connectivity technologies such as WiFi, Zigbee, Z-wave, Thread and Bluetooth Low Energy (BLE) and their associated protocols. Different technologies can be integrated into a common logical network, for example having a Z-wave hub with Z-wave nodes integrated into a Zigbee network. Independent of the technology used, wireless networks tend to not contain information of the exact physical location of the nodes in the network, unless this is manually configured by the installer or the end user. Some information might be extractable from a node's connection, such as which nodes are close to each other in a mesh network architecture, but the exact physical location of nodes is not generally known.

Even when entered manually, information entered relating to the location of a node may only contain information about a node location on a general level (e.g. "master bedroom smoke detector") and may contain no information about the node's exact location. Manually entered information is also prone to errors and can be difficult to maintain in case of location changes or node removals/additions. Manually entered information is also of little value to systems such as a smart home automation system that would benefit from knowledge of exact locations of sensors and how their position relates to each other. Knowledge of the physical location of nodes can enable further aspects of automation such as determining patterns relating to sensing inputs from different locations. Node location information also enables bundling of different inputs to functional groups by identifying which nodes belong to common groups based on their physical location.

Some currently available technologies may be capable of automated location determination but tend to be associated with significant additional cost that can limit their adoption in applications such as smart factory or smart home environments, due to the requirements for most, if not all, nodes to be equipped with additional technology.

### Summary

According to a first aspect there is provided a method of determining a physical location of a plurality of nodes in a wireless network, the method comprising:
i) operating a first node of the plurality of nodes in a scanning mode to detect a second node of the plurality of nodes operating in an advertising mode within range of the first node;
ii) repeating step i) for other nodes of the plurality of nodes to determine a list of node pairs that are within range of each other for each of the plurality of nodes in the wireless network;
iii) transmitting the list of node pairs from each of the plurality of nodes in the wireless network to a controlling node;
iv) instructing by the controlling node each of the node pairs to perform a channel sounding operation to determine a physical distance between the node pair; and
v) constructing by the controlling node a location map of the plurality of nodes in the wireless network based on the physical distance between each node pair.

The method enables the physical location of nodes in a wireless network to be determined without manual input from an installer or user and by utilising functions that can already exist within a wireless network, thereby expanding its functionality without adding cost.

Step i) of the method may comprise the controlling node instructing a single one of the plurality of nodes to operate in the scanning mode and another single one of the plurality of nodes to operate in the advertising mode.

Step i) may comprise the controlling node instructing a single one of the plurality of nodes to operate in the advertising mode and multiple other ones of the plurality of nodes to operate in the scanning mode.

Step i) may comprise the controlling node instructing a single one of the plurality of nodes to operate in the scanning mode and multiple other ones of the plurality of nodes to operate in the advertising mode.

Step i) may comprise the controlling node instructing multiple ones of the plurality of nodes to operate in the scanning mode and multiple other ones of the plurality of nodes to operate in the advertising mode.

The controlling node may determine a sequence for performing steps i) and ii) to determine the list of node pairs.

The controlling node may alternatively instruct each of the plurality of nodes to operate in step i) in either the scanning mode or the advertising mode and in step ii) to switch between the scanning and advertising modes following a cycle period. The cycle period may be predetermined and may be the same for each of the plurality of nodes or may differ for different nodes. The cycle period may vary when step i) is repeated. Step i) may be repeated until all node pairs within range of each other are established.

The location map may comprise a physical location in three dimensions for all nodes having four or more node pairs.

The channel sounding operation may be performed according to the Bluetooth Low Energy standard.

The controlling node may be one of the plurality of nodes and within wireless range of one or more of the other nodes in the wireless network.

According to a second aspect there is provided a controlling node for determining a physical location of a plurality of nodes (102) in a wireless network (100), the controlling node configured to:
i) instruct a first node of the plurality of nodes to operate in a scanning mode to detect a second node of the plurality of nodes operating in an advertising mode within range of the first node;
ii) repeat step i) for other nodes of the plurality of nodes to determine a list of node pairs that are within range of each other for each of the plurality of nodes in the wireless network;
iii) instruct each node of the plurality of nodes to transmit the list of node pairs to the controlling node;
iv) instruct each of the node pairs to perform a channel sounding operation to determine a physical distance between the node pair; and
v) construct a location map of the plurality of nodes in the wireless network based on the physical distance between each node pair.

The controlling node in step i) may be configured to instruct a single one of the plurality of nodes to operate in the scanning mode and another single one of the plurality of nodes to operate in the advertising mode.

The controlling node in step i) may be configured to instruct a single one of the plurality of nodes to operate in the advertising mode and multiple other ones of the plurality of nodes to operate in the scanning mode.

The controlling node in step i) may be configured to instruct a single one of the plurality of nodes to operate in the scanning mode and multiple other ones of the plurality of nodes to operate in the advertising mode.

The controlling node in step i) may be configured to instruct multiple ones of the plurality of nodes to operate in the scanning mode and multiple other ones of the plurality of nodes to operate in the advertising mode.

The controlling node may be configured to determine a sequence for performing steps i) and ii) to determine the list of node pairs.

The controlling node may alternatively be configured to instruct each of the plurality of nodes to operate in step i) in either the scanning mode or the advertising mode and in step ii) to switch between the scanning and advertising modes following a cycle period. The cycle period may be predetermined for each node and may be the same for each of the plurality of nodes or may differ for different nodes. The cycle period may vary when step i) is repeated. Step i) may be repeated until all node pairs within range of each other are established.

The controlling node may be configured to construct the location map comprising a physical location in three dimensions for all nodes having four or more node pairs.

The channel sounding operation may be performed according to the Bluetooth Low Energy standard.

The controlling node may be one of the plurality of nodes and within wireless range of one or more of the other nodes in the wireless network.

According to a third aspect there is provided a computer program comprising instructions to cause a controlling node of a wireless network to perform the method according to the first aspect.

There may be provided a computer program, which when run on a computer, i.e. a controlling node, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a non-transitory computer readable medium, which may be a physical computer readable medium, such as a disc or a memory device, or may be embodied as a transient signal. Such a transient signal may be a network download, including an internet download.

These and other aspects of the invention will be apparent from, and elucidated with reference to, the embodiments described hereinafter.

### Brief description of Drawings

Embodiments will be described, by way of example only, with reference to the drawings, in which:
Figure 1 is a schematic diagram of a wireless network comprising a plurality of nodes;
Figure 2 is an illustration of a sequence of operations involved in determining a distance between a pair of nodes in a wireless network;
Figure 3 is an illustration of a sequence of operations resulting in no connection being made between a pair of nodes in a wireless network;
Figure 4 is an illustration of a sequence of operations in which multiple node pairs in a wireless network are connected and channel sounding operations performed;
Figure 5 is an illustration of an alternative sequence of operations in which multiple node pairs in a wireless network are connected and channel sounding operations performed;
Figure 6 is a flow diagram illustrating an example method of building a proximity table and calculating a location map for a wireless network;
Figure 7 is a flow diagram illustrating an example method of performing proximity determination prior to channel sounding operations;
Figure 8 is a flow diagram illustrating an alternative example method of performing proximity determination prior to channel sounding operations;
Figure 9 is a flow diagram illustrating a further alternative example method of performing proximity determination prior to channel sounding operations;
Figure 10 is a flow diagram illustrating an example method of obtaining distance measurements for a plurality of nodes in a wireless network;
Figure 11 is a flow diagram illustrating an alternative example method of obtaining distance measurements for a plurality of nodes in a wireless network; and
Figure 12 is a flow diagram illustrating a further alternative example method of obtaining distance measurements for a plurality of nodes in a wireless network.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

Many transceivers used as wireless network nodes already contain BLE capability. This functionality is generally included in chipsets combining WiFi and Bluetooth and is currently widely used in the IEEE 802.15.4 standard for wireless personal area networks and in sub-GHz networks for device onboarding. With the introduction of channel sounding proposed for BLE specification 6.0, accurate distance measurements between a pair of BLE devices using channel sounding is possible without the addition of another transceiver. Using BLE channel sounding, a pair of wireless nodes can measure a distance between each other. Ranging using channel sounding provides a system with the only cost-neutral option for ranging between static points that yields distance estimation values of sufficient accuracy for trilateration and mapping.

Primary uses for BLE channel sounding currently are focused around detection of distance or movement of one BLE transceiver relative to other transceivers. Example use cases may for example include a person carrying a BLE transceiver entering a room or approaching a vehicle, where a distance measurement can be used to enable various functionalities.

The BLE channel sounding distance measurement capabilities may be expanded into location determination of any node that is part of a wireless network by repurposing technology intended for distance measurement of two nodes into distance measurement between many nodes and then applying a mathematical model to derive relative node location out of node distance information. This added functionality comes with reuse of already existing BLE functionality (from 6.0 onwards), with no or minimal hardware cost added. To achieve this functionality expansion, only additional software functionality is required.

It may be impractical to add the complete functionality required for node location calculation into every node in the network, because this would add to the computing, memory and power consumption requirements of the nodes, which is generally intended to remain low. Rather, the functionality added to each node can be kept minimal by using a Controlling Node (CN) to construct a location map based on physical distance information obtained from a plurality of nodes in the wireless network. For the purposes of the present disclosure, a CN is a node that has the capability to control other nodes for the purpose of distance measurement as required for location determination, receive distance data from other nodes, perform calculations required for location determination (such as multilateration), and calculate a 2D or 3D map of the nodes in the wireless network. A single wireless network installation may comprise one or multiple CNs. A node with partial functionality of a CN (e.g., having control ability but not calculation ability) may also be considered a CN in some examples. For the purposes of the methods described herein, the CN is required to construct a location map. The functions of a CN may, however, be distributed between different nodes on the network. The CN may itself be one of the plurality of nodes on the wireless network, i.e. may be within wireless range of one or more of the other nodes in the wireless network, or may be a device that is remote from the wireless network.

A Controlling Node may be considered as a logical entity in line with existing network architectures, in which most of the network intelligence is either located in a locally present physical hub (which is common for networks where nodes do not have WiFi and a hub serves as a bridge to the WiFi or internet) or remotely in a cloud infrastructure (which may be used in networks where nodes have WiFi connectivity and can connect to the cloud via a WiFi router, not requiring a physical local hub).

The Controlling Node can be either local or remote. Remote network mapping through a Controlling Node not physically connected to the mapped network enables centralized mapping and monitoring of network node locations in commercial applications beyond a smart home use cases. This can be used for network maintenance and coordinated setup between physically present installers and remote teams.

A network node, i.e. each node in the wireless network, has the ability to perform the required BLE functionality as outlined below and communicate with the CN for the purpose of distance measurement to other nodes. This will require functionality beyond its primary function in the node itself. For example, a temperature sensor node may need additional software code to respond to communications from the CN because the distance measurement function may not be part of its primary function.

A Controlling Node manages and initiates distance measurements between the plurality of nodes in the wireless network, reads back the measurement results and, with the results, performs calculations to determine the relative location of the nodes inside the network to construct a location map. A CN determines how many nodes are involved in the measurement and may determine if any of the measurements need to be repeated to generate a location map of sufficient accuracy as determined by a confidence metric that is algorithmically generated. Communication between the CN and each of the nodes in the wireless network can be via any established network protocol and does not have to involve BLE at all. With this approach, even nodes that are out of the RF range of a CN (which is common in mesh networks) or connected via a different technology (e.g., a Z-wave node connected to a Thread network via Thread-z-Wave bridge) can be located because the distance to neighboring pairs of nodes is the only information needed to construct the location map. A result of this is that a Controlling Node can determine the location of a node even if the node has a communication protocol capability not supported by the CN itself.

BLE itself is not commonly used as a primary connectivity protocol in smart networks. Hence, it may be assumed that a Controlling Node, which may simultaneously fulfil the role of a hub in the smart network, has an established connection to any node that is involved in distance measurement, over BLE or any other connectivity protocol used by the wireless network. This established connection can be used for control and data transfer for the purpose of distance measurement.

A wireless network supporting the method of location determination with BLE channel sounding will need to have various components and functionalities. Firstly, at least one Controlling Node is required, which has the required functionality for control of other nodes and to construct the location map based on measured distances received from the nodes in the wireless network. Secondly, the wireless network requires at least three nodes with hardware and software support for channel sounding, including any CNs also supporting channel sounding. A three-dimensional multilateration requires at least four nodes in wireless connection with each other to define their relative three dimensional location, so a minimum number of nodes in the wireless network may be either four wireless nodes and a Controlling Node without channel sounding functionality, or three wireless notes and a Controlling Node with channel sounding functionality. In practice, the wireless network may include many more nodes arranged in a mesh network, each node in the network being in wireless range of multiple other nodes (preferably four or more for 3D location determining and a minimum of three for 2D location determining). The examples described herein are simplified using only a small number of nodes for ease of understanding. Thirdly, each node in the wireless network is required to be capable of distance measurement with channel sounding, which requires BLE with channel sounding functionality in hardware and software, as specified by the BLE specification.

Each node in the wireless network is part of a device, i.e. a physical unit comprising electronic components providing the hardware and software functionality required for a node. A single device may comprise one or more nodes. For the purposes of this disclosure, a node may be considered to correspond to a device and vice versa. If a device has more than one node, only one node in the device needs to be considered, given that the physical location will be the same for each node.

The Controlling Node, as defined above, is in control of the process of determining lists of node pairs and constructing the location map. The Controlling Node receives the distance measurement results from each of the nodes in the wireless network. Although the actual flow of distance measurements can vary, an example set of commands sent from the CN to each of the nodes may include the following:
- Instruct a node to switch to BLE scanning mode or BLE advertising mode, or in some examples to alternate between scanning and advertising modes in a predetermined manner;
- Instruct a node if it should proceed with a connection once another node is in range or to limit activity to a proximity determination mode, i.e. gathering a list of node pairs prior to performing channel sounding;
- Determine how many other nodes a node should attempt to connect to, ranging from one to unlimited, optionally with a timeout set by the CN;
- Instruct which other nodes a node should attempt to connect to (for example in case the CN requires only one specific measurement to be repeated);
- Instruct a node how to report results, either one at a time after channel sounding measurement is done, once all measurements are finished, or to wait until the CN requests the results;
- Instruct a node to connect to other nodes already connected to in a particular session or to connect only to nodes not seen in the current session; and
- Instruct a node how many channel sounding operations to perform, optionally with a defined confidence target.

Before starting channel sounding operations, nodes in the wireless network can perform an 'proximity determination' procedure. While in this proximity determination phase, the nodes do not establish connections between each other. Instead, a scanning node returns to the CN a list of all discovered advertising nodes, i.e. a list of node pairs connectable from that node. This process is repeated until a proximity table is constructed, which contains lists of node pairs for each node in the wireless network. The CN can then selectively use the node proximity information to carry out optimized channel sounding operations to determine a physical distance between them.

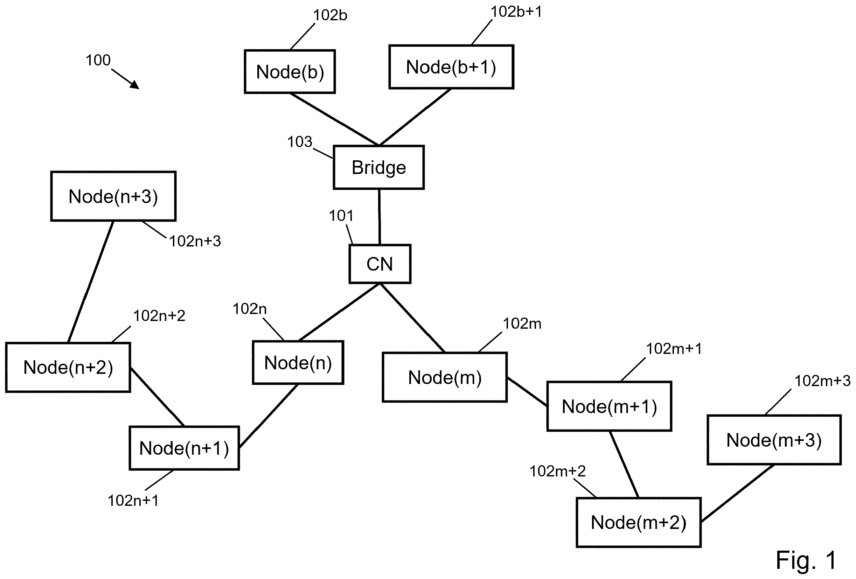

An example wireless network system 100 is illustrated schematically in Figure 1. A Controlling Node CN 101 is in communication with a plurality of nodes 102n,n+1,n+2,n+3, 102m,m+1,m+2,m+3, 102b,b+1. The different groups of nodes (groups n, m and b) may be in different physical locations or may be grouped by the connections made with the CN 101 and may have at least some physical overlap. The CN 101 is connected to nodes 102b, 102b+1 via a bridge 103. Performing a series of proximity determination steps enables the CN 101 to determine which pairs of nodes are in physical proximity with each other, even if their connection to the CN 101 may not indicate this.

As a first step, the CN 101 needs to determine the channel sounding capabilities of nodes connected to the network. For this, the CN 101 queries nodes over existing data connections, which are indicated in Figure 1 as lines connecting the CN 101 to the nodes and lines connecting the nodes to each other. Alternative connections may also be possible, depending on the current configuration of the network. Connections between the nodes 102 and the CN 101 may be by wireless connection using any available protocol or in some cases may be by wired connection.

Based on information about nodes' capabilities and their connection to CN and other nodes, the CN can perform proximity determination 604 procedure to build a proximity table.

Proximity determination requires pairs of nodes to be either in BLE scanning or advertising mode. Establishment of BLE data connection is not required to detect BLE nodes in proximity.

In contrast, BLE channel sounding requires establishment of BLE data connection between two nodes prior to starting a CS based distance measurement.

For both proximity determination and BLE channel sounding, the communication between different nodes in the network can be structured in multiple ways:
This may be in one-to-one, one-to-many, many-to-many or asynchronous/chaotic modes.

According to a first (one-to-one) mode, the CN instructs a single one of the plurality of nodes 102 to operate in the scanning mode and another single one of the plurality of nodes to operate in the advertising mode. This step is then repeated for a different pair of nodes until all potential pairs of nodes in the wireless network 100 are covered.

According to a second (one-to-many) mode, the CN 101 instructs a single one of the plurality of nodes 102 to operate in the advertising mode and multiple other ones of the plurality of nodes 102 to operate in the scanning mode. This step is then repeated for a different single one of the plurality of nodes operating in the advertising mode until all potential pairs of nodes in the wireless network 100 are covered.

According to a third (one-to-many) mode, the CN 101 instructs a single one of the plurality of nodes 102 to operate in the scanning mode and multiple other ones of the plurality of nodes 102 to operate in the advertising mode. This step is then repeated for a different single one of the plurality of nodes operating in the scanning mode until all potential pairs of nodes in the wireless network 100 are covered.

According to a fourth (many-to-many) mode, the CN 101 instructs multiple ones of the plurality of nodes 102 to operate in the scanning mode and multiple other ones of the plurality of nodes 102 to operate in the advertising mode. This step is then repeated for ones of the plurality of nodes until all potential pairs of nodes in the wireless network are covered.

In each of the first to fourth modes, the CN 101 may determine a sequence of nodes to determine the list of node pairs.

According to a fifth (automatic/chaotic) mode, the CN 101 instructs each of the plurality of nodes 102 to operate in either the scanning mode or the advertising mode and to switch between the scanning and advertising modes in a predetermined manner. The sequence then repeats without further input from the CN 101 until all, or a sufficient number, of node pairs are covered.

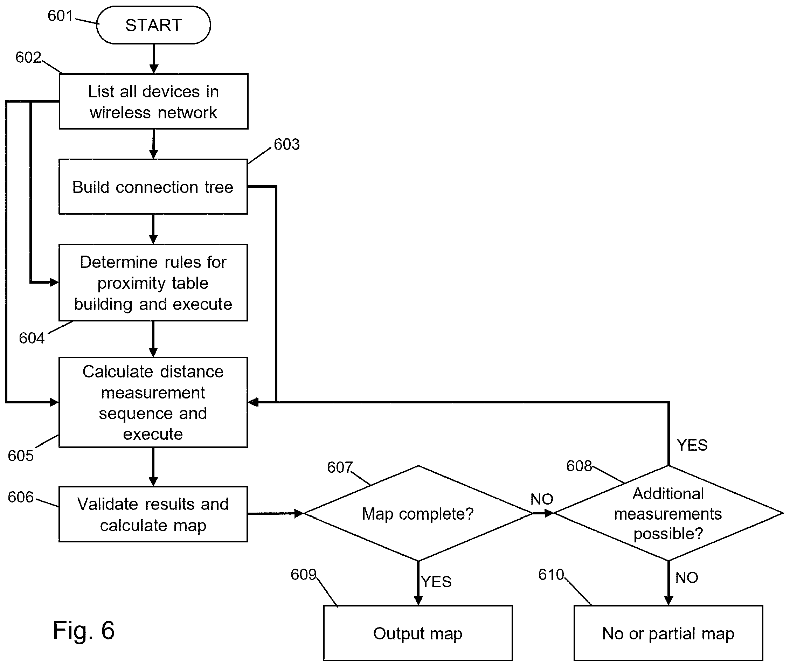

The CN 101 can also combine above methods based on network architecture, for example choosing different approaches for different logical or physical parts of the network. Figure 6 illustrates an example flow diagram illustrating a method of building a list of distance measurements and generating a location map for a plurality of nodes in a wireless network, setting out an example series of steps taken by the Controlling Node 101. Upon starting (step 601), the CN 101 lists all devices in the wireless network (step 602), builds a connection tree (step 603) and determines rules for building a proximity table and executes these rules (step 604). In some examples a connection tree may already be available or may not be required, in which case step 603 may be skipped. In other examples, steps 603 and 604 may be skipped, proceeding to step 605 where a distance measurement sequence is calculated and executed. The distance results are then validated (step 606) and a location map calculated. If the location map is complete (step 607), the map is output (step 609), otherwise a check is made to see if additional measurements are possible (step 608). If so, step 605 is repeated. If not, either a partial map or no map is output (step 610).

Independent of the measurement flow that is adopted by the CN 101, the baseline operation of distance measurement happens only between pairs of nodes within range of each other. To initiate a channel sounding procedure between a pair of nodes, a BLE connection between two nodes, for example Node(n) 102n and Node(m) 102m must first be established. To do this, the CN 101 may command Node(n) 102n to advertise and command Node(m) 102m to scan for an advertiser with a device name matching Node(n) 102n. Node(m) 102m may then initiate a connection if it discovers Node(n) 102n, i.e. if Node(n) 102n is within range.

Once connected, Node(n) 102n and Node(m) 102m perform a channel sounding procedure as defined in the Bluetooth Low Energy channel sounding specification and a standardized Bluetooth Low Energy ranging profile. The results of this channel sounding procedure, which is either a distance estimation to Node(n) 102n or a response indicating that Node(n) 102n could not be discovered, are sent to the CN 101 based on the configuration described previously.

After a CS procedure between two nodes, both nodes can be in possession of the distance information. The CN can select from which Node the information is obtained, as per configuration possibilities outlined earlier, or may select both distance information measurements for further processing.

The CN 101 repeats this process for every node in the wireless network until the CN 101 can construct a table of distances between each node pair in the network or an indicator that a pair of nodes is outside of wireless range or until the CN 101 estimates the measured information is sufficient and additional node distance measurements are not required. This could be true for nodes whose location is not relevant for the system (e.g., location of a water heater in the smart home environment might be irrelevant).

After the required measurements are completed, and distance measurement data is available at the CN 101, the CN 101 constructs a location map of the plurality of nodes in the wireless network based on the measured physical distance between each node pair, as received from each node in the network. The location map may be constructed according to known processes such as true-range multilateration.

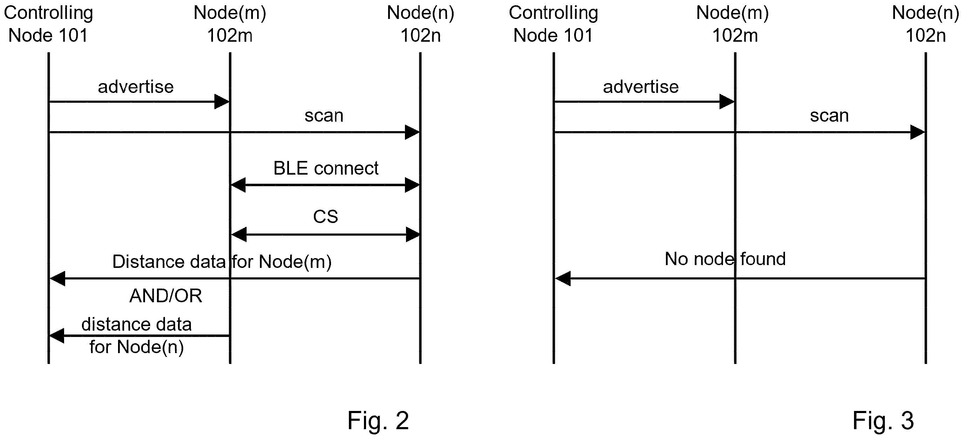

Figure 2 illustrates an example sequence of operations between the CN 101 and a pair of nodes in the wireless network 100. In a first step, the CN sends instructions to node(m) 102m to enter into an advertising mode and to node(n) 102n to enter into a scanning mode. Node(n) 102n then detects Node(m) and a BLE connection is established between the two nodes. A channel sounding (CS) operation is then performed and distance data for Node(m) 102m is sent to the CN 101 from Node(n) and/or distance data for Node(n) is sent to the CN 101 from Node(m).

Alternatively, as illustrated in Figure 3, after the nodes enter into scanning and advertising modes, Node(n) 102n returns a message to the CN 101 that no node has been found if Node(m) 102m is out of wireless range of Node(n) 102n.

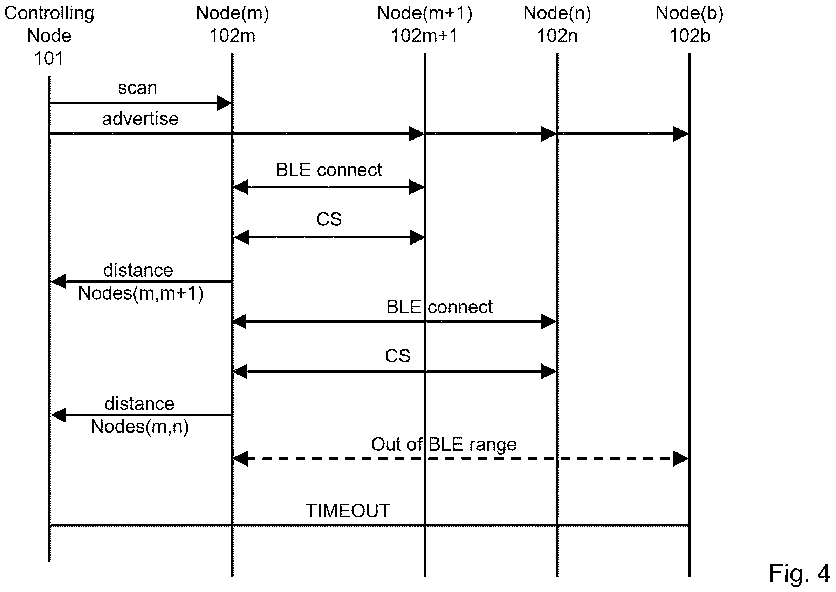

Alternatively, and corresponding to the third (one-to-many) mode described above, the CN can configure one node as a BLE scanning node and two or more nodes as BLE advertising nodes, for example Node(m) 102m instructed to operate in scanning mode and Nodes 102m+1, 102n, 102b to operate in advertising mode. An example sequence of operations is illustrated in Figure 4. In this sequence, the scanning node 102m, after detecting advertising nodes 102m+1, 102n, executes a CS operation with each of the advertising nodes 102m+1, 102n that are within range (Node(b) 102b being out of range) and returns to the CN 101 the respective distances of the nodes within reach. A timeout is defined so that the scanning node 102m does not continue scanning indefinitely for other advertising nodes.

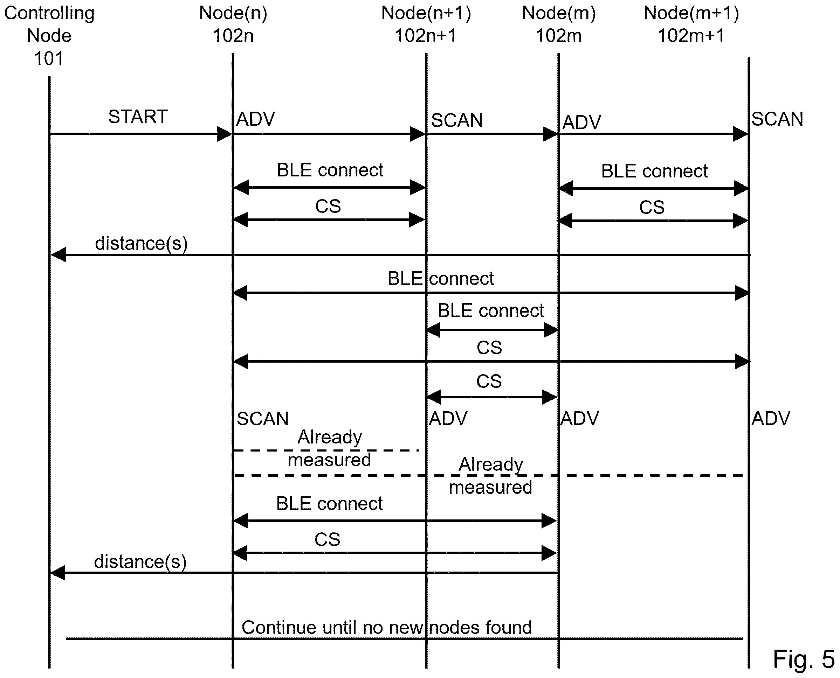

A more complex, but possibly time-saving, implementation according to the fifth (automatic/chaotic) mode described above may involve the CN 101 configuring each of the nodes in the wireless network 100 to autonomously switch between advertising and scanning modes. An example sequence of operations is illustrated in Figure 5 for a subset of nodes 102n, 102n+1, 102m, 102m+1. According to this arrangement, any node in the network will at some point be either an advertising or scanning node to its counterparts, performing all required measurements without the interaction of the CN 101. A further advantage of this flow is in the availability of redundant information because measurements between the same pairs of nodes will be repeated, potentially providing confirmation of the measurement accuracy or a measurement with a higher confidence level. This is also, however, likely the method resulting in highest power consumption due to the repeated connection and CS operations, which is of relevance for any battery-powered device.

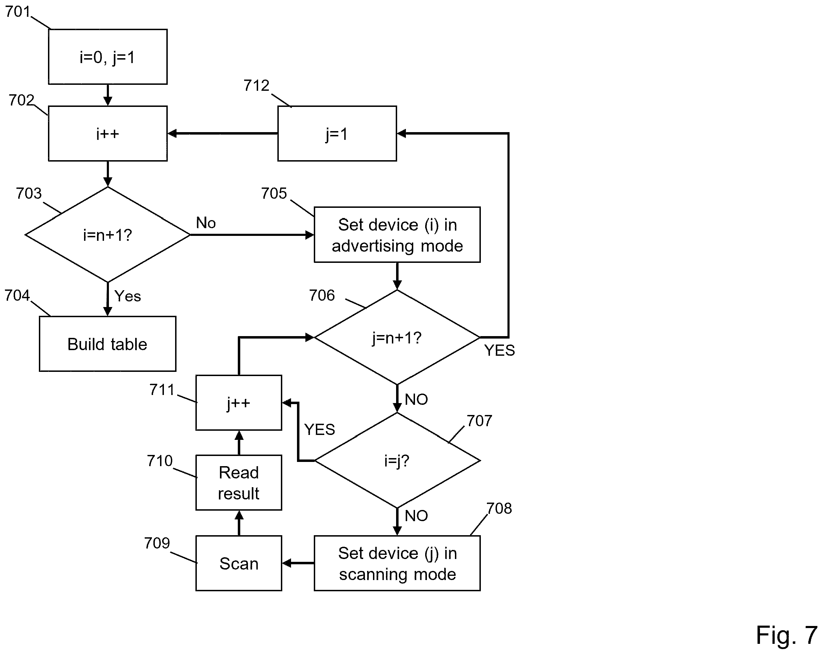

Figure 7 is a flow chart illustrating an example sequence of operations performed by the CN 101 for operating the plurality of nodes in the one-to-one mode for proximity determination. In a first step 701, a first node identifier i is set to 0 and a second node identifier j is set to 1. In step 702, the first node identifier is incremented by 1. If the first node identifier is greater than the number of nodes n (step 703), the CN 101 proceed to build the table of node pairs (step 704). Otherwise, the CN 101 instructs a first node identified by the first node identifier to operate in advertising mode (step 705). A check is then made as to whether the second node identifier is greater than the number of nodes (step 706). If so, the second node identifier is set to 1 (step 712) and the process proceeds further with step 702. If not, a check is made as to whether the first and second node identifiers are the same (step 707), i.e. whether the same node is being targeted for both advertising and scanning, which is clearly not possible. If so, the process skips to step 711 to increment the second node identifier. If not, the device defined by the second node identifier j is set to scanning mode (step 708), a scan performed (step 709) and the results read (710). The second node identifier is then incremented (step 711) and the process proceeds from step 706. The process cycles through all combinations of node pairs until all possible combinations are used, following which a table is built (step 704).

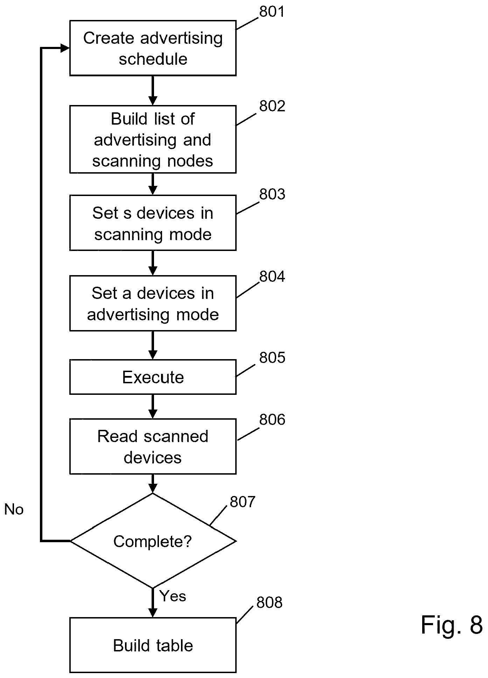

Figure 8 is a flow chart illustrating a process involving a many-to-many mode for proximity determination. In step 801 the CN 101 creates an advertising schedule, where the number, a, of advertising nodes is between 1 and n and the number, s, of scanning nodes is between 1 and n, where n is the total number of nodes. In step 802 a list of advertising and scanning nodes is built. In step 803 a number s of devices are set to scanning mode. In step 804 a number a of devices are set to advertising mode. The scanning is then executed at step 805, either under control of each device or under control of the CH 101, and the CN 101 reads the scanned device outputs at step 806. The process then repeats until all nodes are covered (step 807), following which the table is built (step 808).

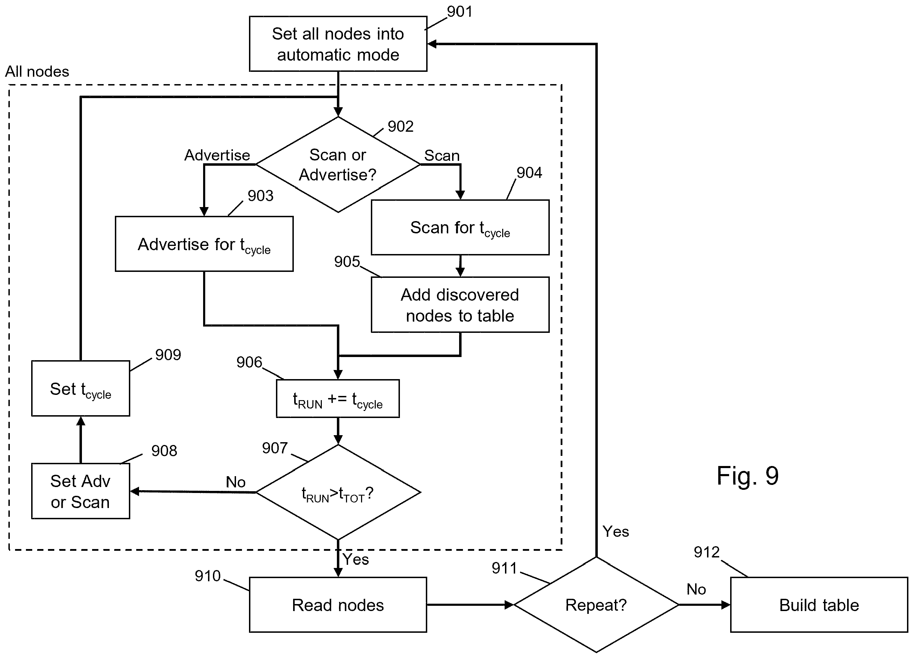

Figure 9 is a flow chart illustrating a process involving an automatic (or chaotic) mode for proximity determination, in which the CN 101 instructs each of the nodes in the wireless network to switch between scanning an advertising following a predetermined cycle period, or cycle time, t_{cycle}. In step 901 the CN 101 sets all devices/nodes in the wireless network into automatic mode, defining a total, or timeout, time t_{TOT}, a run time t_{RUN} and a cycle time t_{cycle}. , where t_{RUN} is initially set to zero for all devices. Steps 902 to 908 are then carried out for all devices concurrently until the run time t_{RUN} is greater than the total time t_{TOT}. In step 902, a node is either in scanning or advertising mode. If the node is in advertising mode, the node advertises for the cycle time t_{cycle} (step 903). The cycle time t_{cycle} may be set the same for each node or may differ between nodes. The cycle time may vary between cycles, for example randomly or pseudo-randomly. If the node is in scanning mode, the node scans for advertising nodes for the cycle time t_{cycle} (step 904) and then adds any discovered nodes to a list or table (step 905). The cycle time t_{cycle} is then added to the run time t_{RUN} (step 906). If the run time t_{RUN} has not exceeded the total time t_{TOT} (step 907), at step 908 the node is set to the other mode, i.e. either scanning or advertising, and the cycle time t_{cycle} is reset (step 909), following which the process repeats starting from step 902. Once the run time t_{RUN} exceeds the total time t_{TOT}, at step 910 the list of discovered nodes is read by the CN 101 from each node. The process may then repeat as required (step 911), otherwise the CN 101 then builds the table (step 912).

Example tables for n=8 resulting from the above described processes are illustrated below. Table 1 below indicates the resulting table when all node pairs are assessed from both directions, i.e. every node has operated in both advertising and scanning modes. This can result in a table that is symmetric about the diagonal, with nodes 1 to 8 paired with all other nodes (except itself). For some pairs, in this case node pairs 3+2, 6+1, 6+2, 6+3, 6+4, 6+5, 7+1, 7+2, 7+3, 7+4, 7+5 and 7+8 (and vice versa), these pairs are out of range of each other and cannot therefore be assessed for channel sounding operations. All other node pairs are determined to be within range of each other.

In an alternative example, only one half of the table needs to be constructed, given that the node pairs are likely to be symmetric, i.e. each node pair should be possible with either node being in scanning or advertising modes. Creating a redundant table as in Table 1, however, has an advantage of providing two possible distance measurements by channel sounding, which can increase the measurement accuracy. Also, in some cases the table may not be symmetric, for example if there is a difference in transmission power between different nodes such that one node may not be able to detect another node but the reverse may result in detection.

Creating a proximity table first before performing channel sounding enables the CN to provide instructions to node pairs identified in the table to perform channel sounding operations. Given that channel sounding operations require more time and power, this can result in more efficient operation because only those operations that are needed are instructed.

**Table 1 - Example table of node pairs following proximity determination.**

| | 1 | 2 | 3 | 4 | 5 | 6 | 7 | 8 |
|---|---|---|---|---|---|---|---|---|
| 1 | | | ✔ | ✔ | ✔ | X | X | ✔ |
| 2 | ✔ | | X | ✔ | ✔ | X | X | ✔ |
| 3 | ✔ | X | | ✔ | ✔ | X | X | ✔ |
| 4 | ✔ | ✔ | ✔ | | ✔ | X | X | ✔ |
| 5 | ✔ | ✔ | ✔ | ✔ | | X | X | ✔ |
| 6 | X | X | X | X | X | | ✔ | ✔ |
| 7 | X | X | X | X | X | ✔ | | X |
| 8 | ✔ | ✔ | ✔ | ✔ | ✔ | ✔ | X | |

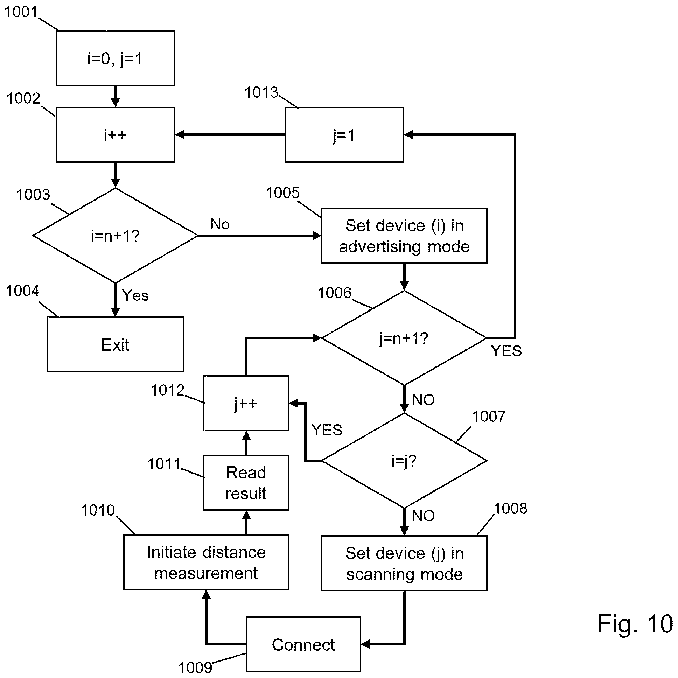

Figures 10, 11 and 12 are flow diagrams similar to Figures 7, 8 and 9 respectively, in which similar processes are followed after the proximity determination process to perform channel sounding operations for each node pair. The processes described below may also be followed without the above proximity determination process, in which all possible node pairs are attempted rather than a selection provided by the proximity table.

Figure 10 illustrates an example sequence of operations performed by the CN 101 for operating the plurality of nodes in the one-to-one mode following build of a proximity table as described above. In a first step 1001, a first node identifier i is set to 0 and a second node identifier j is set to 1. In step 1002, the first node identifier is incremented by 1. If the first node identifier is greater than the number of nodes n (step 1003), the process is completed and exits (step 1004). Otherwise, the CN 101 instructs a first node identified by the first node identifier to operate in advertising mode (step 1005). A check is then made as to whether the second node identifier is greater than the number of nodes (step 1006). If so, the second node identifier is set to 1 (step 1013) and the process proceeds further with step 1002. If not, a check is made as to whether the first and second node identifiers are the same (step 1007), i.e. whether the same node is being targeted for both advertising and scanning, which is clearly not possible. If so, the process skips to step 1012 to increment the second node identifier. If not, the device defined by the second node identifier j is set to scanning mode (step 1008), a connection operation performed (step 1009), distance measurement by channel sounding initiated (step 1010) and the results read (1011). The second node identifier is then incremented (step 1012) and the process proceeds from step 1006. The process cycles until all node pairs are covered.

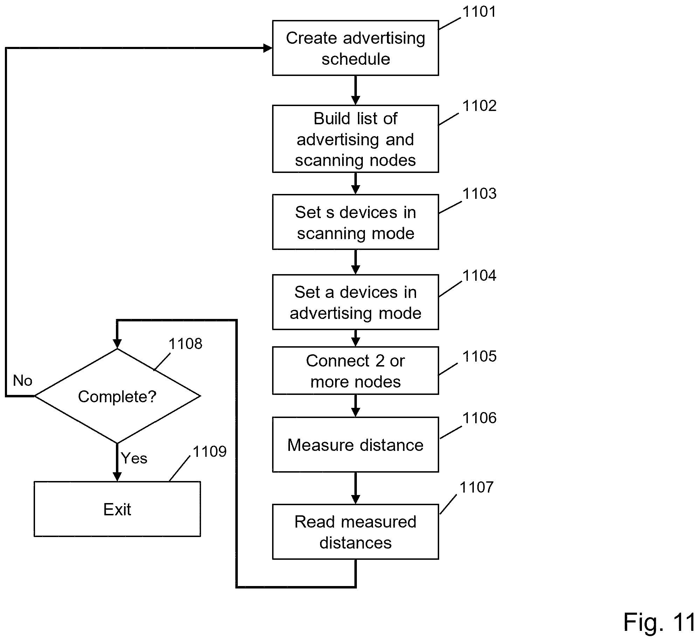

Figure 11 illustrating a process involving a many-to-many mode. In step 1101 the CN 101 creates an advertising schedule, where the number, a, of advertising nodes is between 1 and n and the number, s, of scanning nodes is between 1 and n, where n is the total number of nodes, taking into account node pairs established previously. In step 1102 a list of advertising and scanning nodes is built. In step 1103 a number s of devices are set to scanning mode. In step 1104 a number a of devices are set to advertising mode. Two or more nodes are then connected (step 1105) and channel sounding performed to measure distance (step 1106). The CN 101 then reads the measured distances (step 1107) and checks (step 1108) whether the process is complete. The process repeats until all node pairs are measured, following which the process exits (step 1109).

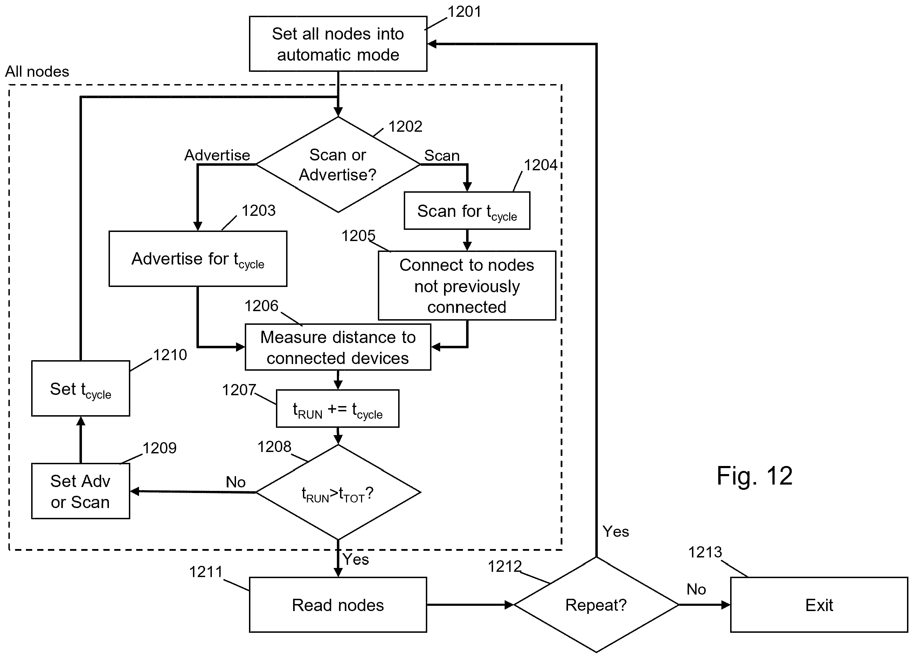

Figure 12 illustrates a process involving an automatic (or chaotic) mode, in which the CN 101 instructs each of the nodes in the wireless network to switch between scanning an advertising following a predetermined cycle period t_{cycle}. In step 1201 the CN 101 sets all devices/nodes in the wireless network into automatic mode, defining a total, or timeout, time t_{TOT}, a run time t_{RUN} and a cycle time t_{cycle}. , where t_{RUN} is initially set to zero for all devices. Steps 1202 to 1209 are then carried out for all devices concurrently until the run time t_{RUN} is greater than the total time t_{TOT}. In step 1202, a node is either in scanning or advertising mode. If the node is in advertising mode, the node advertises for the cycle time t_{cycle} (step 1203). If the node is in scanning mode, the node scans for advertising nodes for the cycle time t_{cycle} (step 1204) and then connects to any nodes that have not previously been connected to (step 1205), following which channel sounding is performed (step 1206) to measure distance to connected devices. The cycle time t_{cycle} is then added to the run time t_{RUN} (step 1207). If the run time t_{RUN} has not exceeded the total time t_{TOT} (step 1208), at step 1209 the node is set to the other mode, i.e. either scanning or advertising, and the cycle time t_{cycle} is reset (step 1210), following which the process repeats starting from step 1202. Once the run time t_{RUN} exceeds the total time t_{TOT}, at step 1211 the distance measurements are read by the CN 101 from each node. The process may then repeat as required (step 1212), otherwise the process exits (step 1213).

Following completion of all channel sounding operations, distance measurements are determined for all node pairs in the build table. An example distance measurement table for the 8 node network example described above is provided in Table 2 below, where Vᵢⱼ is the measured distance between a pair of nodes i and j. As with Table 1, only the upper or lower half of the table is necessary to determine a full set of available distance measurements, but corresponding measurements in the other half of the table, with the same distance measured from the other node of a node pair, can be used to increase the accuracy of measurement.

**Table 2 - Example table of distance measurements after channel soundings.**

| | 1 | 2 | 3 | 4 | 5 | 6 | 7 | 8 |
|---|---|---|---|---|---|---|---|---|
| 1 | | V₁₂ | V₁₃ | V₁₄ | V₁₅ | - | - | V₁₈ |
| 2 | V₂₁ | | - | - | V₂₅ | - | - | V₂₈ |
| 3 | V₃₁ | - | | V₃₄ | V₃₅ | - | - | V₃₈ |
| 4 | V₄₁ | V₄₂ | V₄₃ | | V₄₅ | | - | V₄₈ |
| 5 | V₅₁ | V₅₂ | V₅₃ | V₅₄ | | - | - | V₅₈ |
| 6 | - | - | - | - | - | | V₆₇ | V₆₈ |
| 7 | - | - | - | - | - | V₇₆ | | - |
| 8 | V₈₁ | V₈₂ | V₈₃ | V₈₄ | V₈₅ | V₈₆ | - | |

From reading the present disclosure, other variations and modifications will be apparent to the skilled person. Such variations and modifications may involve equivalent and other features which are already known in the art of wireless networks, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method of determining a physical location of a plurality of nodes (102) in a wireless network (100), the method comprising:
i) operating a first node (102m) of the plurality of nodes (102) in a scanning mode to detect a second node (102n) of the plurality of nodes (102) operating in an advertising mode within range of the first node (102m);
ii) repeating step i) for other nodes of the plurality of nodes (102) to determine a list of node pairs that are within range of each other for each of the plurality of nodes (102) in the wireless network (100);
iii) transmitting the list of node pairs from each of the plurality of nodes (102) in the wireless network (100) to a controlling node (101);
iv) instructing by the controlling node (101) each of the node pairs to perform a channel sounding operation to determine a physical distance between the node pair; and
v) constructing by the controlling node (101) a location map of the plurality of nodes (102) in the wireless network (100) based on the physical distance between each node pair.

2. The method of claim 1, wherein step i) comprises the controlling node (101) instructing a single one of the plurality of nodes (102) to operate in the scanning mode and another single one of the plurality of nodes (102) to operate in the advertising mode.

3. The method of claim 1, wherein step i) comprises the controlling node (101) instructing a single one of the plurality of nodes (102) to operate in the advertising mode and multiple other ones of the plurality of nodes (102) to operate in the scanning mode.

4. The method of claim 1, wherein step i) comprises the controlling node (101) instructing a single one of the plurality of nodes (102) to operate in the scanning mode and multiple other ones of the plurality of nodes (102) to operate in the advertising mode.

5. The method of claim 1, wherein step i) comprises the controlling node (101) instructing multiple ones of the plurality of nodes (102) to operate in the scanning mode and multiple other ones of the plurality of nodes (102) to operate in the advertising mode.

6. The method of any one of claims 2 to 5, wherein the controlling node (102) determines a sequence for performing steps i) and ii) to determine the list of node pairs.

7. The method of claim 1, wherein the controlling node (101) instructs each of the plurality of nodes (102) to operate in step i) in either the scanning mode or the advertising mode and in step ii) to switch between the scanning and advertising modes following a cycle period.

8. The method of claim 7, wherein the cycle period is predetermined for each node.

9. The method of claim 7, wherein the cycle period varies when step i) is repeated.

10. The method of any one of claims 7 to 9, wherein step i) is repeated until all node pairs within range of each other are established.

11. The method of any preceding claim, wherein the location map comprises a physical location in three dimensions for all nodes having four or more node pairs.

12. The method of any preceding claim, wherein the channel sounding operation is performed according to the Bluetooth Low Energy standard.

13. The method of any preceding claim, wherein the controlling node is one of the plurality of nodes and is within wireless range of one or more of the other nodes in the wireless network.

14. A controlling node (101) for determining a physical location of a plurality of nodes (102) in a wireless network (100), the controlling node configured to:
i) instruct a first node (102m) of the plurality of nodes (102) to operate in a scanning mode to detect a second node (102n) of the plurality of nodes (102) operating in an advertising mode within range of the first node (102m);
ii) repeat step i) for other nodes of the plurality of nodes (102) to determine a list of node pairs that are within range of each other for each of the plurality of nodes (102) in the wireless network (100);
iii) instruct each node of the plurality of nodes (102) to transmit the list of node pairs to the controlling node (101);
iv) instruct each of the node pairs to perform a channel sounding operation to determine a physical distance between the node pair; and
v) construct a location map of the plurality of nodes (102) in the wireless network (100) based on the physical distance between each node pair.

15. A computer program comprising instructions for causing a controlling node (101) of a wireless network (100) to perform the method according to any one of claims 1 to 13.

## Amended claims

### Amended claims in accordance with Rule 137(2) EPC.

1. A method of determining a physical location of a plurality of nodes (102) in a wireless network (100), the method comprising:
i) operating a first node (102m) of the plurality of nodes (102) in a scanning mode to detect a second node (102n) of the plurality of nodes (102) operating in an advertising mode within range of the first node (102m);
ii) repeating step i) for other nodes of the plurality of nodes (102) to determine a list of node pairs that are within range of each other for each of the plurality of nodes (102) in the wireless network (100);
iii) transmitting the list of node pairs from each of the plurality of nodes (102) in the wireless network (100) to a controlling node (101);
iv) instructing by the controlling node (101) each of the node pairs to perform a channel sounding operation to determine a physical distance between the node pair, wherein the channel sounding operation is performed according to the Bluetooth Low Energy standard; and
v) constructing by the controlling node (101) a location map of the plurality of nodes (102) in the wireless network (100) based on the physical distance between each node pair.

2. The method of claim 1, wherein step i) comprises the controlling node (101) instructing a single one of the plurality of nodes (102) to operate in the scanning mode and another single one of the plurality of nodes (102) to operate in the advertising mode.

3. The method of claim 1, wherein step i) comprises the controlling node (101) instructing a single one of the plurality of nodes (102) to operate in the advertising mode and multiple other ones of the plurality of nodes (102) to operate in the scanning mode.

4. The method of claim 1, wherein step i) comprises the controlling node (101) instructing a single one of the plurality of nodes (102) to operate in the scanning mode and multiple other ones of the plurality of nodes (102) to operate in the advertising mode.

5. The method of claim 1, wherein step i) comprises the controlling node (101) instructing multiple ones of the plurality of nodes (102) to operate in the scanning mode and multiple other ones of the plurality of nodes (102) to operate in the advertising mode.

6. The method of any one of claims 2 to 5, wherein the controlling node (102) determines a sequence for performing steps i) and ii) to determine the list of node pairs.

7. The method of claim 1, wherein the controlling node (101) instructs each of the plurality of nodes (102) to operate in step i) in either the scanning mode or the advertising mode and in step ii) to switch between the scanning and advertising modes following a cycle period.

8. The method of claim 7, wherein the cycle period is predetermined for each node.

9. The method of claim 7, wherein the cycle period varies when step i) is repeated.

10. The method of any one of claims 7 to 9, wherein step i) is repeated until all node pairs within range of each other are established.

11. The method of any preceding claim, wherein the location map comprises a physical location in three dimensions for all nodes having four or more node pairs.

12. The method of any preceding claim, wherein the controlling node is one of the plurality of nodes and is within wireless range of one or more of the other nodes in the wireless network.

13. A controlling node (101) for determining a physical location of a plurality of nodes (102) in a wireless network (100), the controlling node configured to:
i) instruct a first node (102m) of the plurality of nodes (102) to operate in a scanning mode to detect a second node (102n) of the plurality of nodes (102) operating in an advertising mode within range of the first node (102m);
ii) repeat step i) for other nodes of the plurality of nodes (102) to determine a list of node pairs that are within range of each other for each of the plurality of nodes (102) in the wireless network (100);
iii) instruct each node of the plurality of nodes (102) to transmit the list of node pairs to the controlling node (101);
iv) instruct each of the node pairs to perform a channel sounding operation to determine a physical distance between the node pair, wherein the channel sounding operation is performed according to the Bluetooth Low Energy standard; and
v) construct a location map of the plurality of nodes (102) in the wireless network (100) based on the physical distance between each node pair.

14. A computer program comprising instructions for causing a controlling node (101) of a wireless network (100) to perform the method according to any one of claims 1 to 12.
